# EUROPÄISCHE PATENTSCHRIFT

(11) **EP 1 941 178 B1**
(45) Veröffentlichungstag und Bekanntmachung des Hinweises auf die Patenterteilung: **30.04.2014**
(21) Anmeldenummer: 06806323.9
(22) Anmeldetag: 17.10.2006
(51) Int. Cl.: F16D 65/14, F16D 55/48

(54) **SELBSTVERSTÄRKENDE SCHEIBENBREMSE MIT ELEKTROMECHANISCHEM AKTUATOR**
SELF-ENERGIZING DISC BRAKE WITH AN ELECTROMECHANICAL ACTUATOR
FREIN A DISQUE A AUTO-AMPLIFICATION POURVU D'UN ACTIONNEUR ELECTROMECANIQUE

(30) Priorität: 18.10.2005 DE 102005049760
(43) Veröffentlichungstag der Anmeldung: 09.07.2008
(73) Patentinhaber: KNORR-BREMSE Systeme für Nutzfahrzeuge GmbH, 80809 München (DE)
(72) Erfinder: BAUMGARTNER, Johann, 85368 Moosburg (DE); GEISSLER, Steffen, 85399 Hallbbergmoos (DE); TRIMPE, Robert, 82234 Wessling (DE)
(74) Vertreter: Mattusch, Gundula
(86) Internationale Anmeldenummer: PCT/EP2006/009988
(87) Internationale Veröffentlichungsnummer: WO 2007/045429

(56) Entgegenhaltungen:
- WO-A-03/036121
- DE-A1- 10 201 607
- DE-A1- 19 825 683
- DE-A1-102005 030 618
- US-A1- 2003 205 438

## Beschreibung

Die Erfindung betrifft eine Scheibenbremse mit einem als Elektromotor ausgelegten elektromechanischen Aktuator zur Betätigung einer Zuspannvorrichtung zum Zuspannen der Bremse, die eine Selbstverstärkungseinrichtung aufweist.

Scheibenbremsen dieser Art sind an sich bekannt. Sie haben sich bisher in der Praxis nicht durchsetzen können, da keine konstruktiv und wirtschaftlich überzeugenden Konzepte vorgestellt wurden.

Als Selbstverstärkungseinrichtung eignet sich beispielsweise eine Rampen- oder Keilfläche, an welcher sich der nicht rein senkrecht zur Bremsscheibe sondern auch in Drehrichtung bzw. parallel zur Bremsscheibe bewegte Bremsbelag abstützt.

Die Zuspannvorrichtung kann z.B. ein Planetengetriebe umfassen, welches von einem Elektromotor als Aktuator angetrieben wird. Dieses Planetengetriebe betätigt bei einer Betriebsbremsung ein die Betätigungskraft umlenkendes Element (z.B. eine Exzenterwelle), welche den Bremsbelag zur Nutzung der Selbstverstärkung mittels einer Druckplatte in Umfangsrichtung der Bremsscheibe verschiebt. Bei einer Parkbremsung treibt das Planetengetriebe über ein äußeres Zahnrad zwei parallel angeordnete, selbsthemmende Gewindespindeln an. Diese setzen die eingeleitete Rotationsbewegung in eine Linearbewegung der Spindelmuttern um und drücken somit den Bremsbelag an die Bremsscheibe.

Das Planetengetriebe dieser Anordnung erfährt bei Bremsungen sehr hohe Drehmomente. Durch diese Belastung und den relativ geringen, zur Verfügung stehenden Bauraum in der Radbremse ist es notwendig, ein relativ hochwertiges Planetengetriebe einzusetzen.

Eine Prinzipskizze einer gattungsgemäßen Scheibenbremse zeigt die WO 03/036121. Hier wirkt der Spindeltrieb direkt auf einen Bremsbelag. Es ist nicht dargestellt, wie die Kraftübertragung auf den Bremsbelag konstruktiv in die Praxis umgesetzt werden kann.

Die DE 102 01 607 A 1 zeigt eine weitere Prinzipskizze einer selbstverstärkenden Scheibenbremse. Hier wirkt eine elektromagnetische Hubvorrichtung auf eine Hebelanordnung zum Bewegen des Bremsbelages auch in Umfangsrichtung ein.

Vor diesem Hintergrund ist es die Aufgabe der Erfindung, ein alternatives Konzept zur Realisierung einer selbstverstärkenden Scheibenbremse anzugeben, das kostengünstig realisierbar ist. Zusätzlich ist ein guter Wirkungsgrad erwünscht, da dieser direkt die erforderliche Antriebsleistung des Elektromotors beeinflusst.

Die Erfindung löst diese Aufgabe durch den Gegenstand des Anspruchs 1.

Vorteilhafte Ausgestaltungen sind den übrigen Unteransprüchen zu entnehmen.

Dieses Konzept kann kostengünstig insbesondere ohne teure hochpräzise Teile umgesetzt werden und bietet die Möglichkeit zur Realisierung eines guten Wirkungsgrades.

Diese Anordnung trägt vorteilhaft dazu bei, auf den Einsatz hochpräziser Teile verzichten zu können.

Dabei wird die Selbstverstärkungseinrichtung auf einfache Weise dadurch realisiert, dass sich der Bremsbelag an seiner Druckplatte in Umfangsrichtung der Bremsscheibe direkt oder über Wälzkörper an einer Keil- oder Rampenfläche abstützt. Vorzugsweise ist der Bremsbelag ferner an seiner Druckplatte mit einem Element der Hebelanordnung gekoppelt, so dass der Hebel den Bremsbelag nur oder auch in Umfangsrichtung der Scheibe verschiebt.

Besonders bevorzugt wirkt das linear bewegliche Druckelement des Spindelsystems auf einen Hebel ein, der dazu dient, den zuspannseitigen Bremsbelag über die Rampenanordnung gegen die Bremsscheibe zu drücken.

Es ist weiter vorteilhaft, wenn die Keil- oder Rampenflächen an bremsscheibenzugewandten Enden von in sich längenveränderlichen Druckstempeln ausgebildet sind, da derart die Selbstverstärkungseinrichtung einfach mit einer Nachstellung gekoppelt werden kann.

Nach einer konstruktiv vorteilhaften Variante weist das Spindelsystem eine antreibende Betätigungshülse auf, welche - z.B. an einem zahnradartigen Ansatz - durch den Elektromotor direkt bzw. das diesem nachgeschaltete Getriebe drehbar ist. Vorzugsweise ist diese Betätigungshülse als zentrales Bestandteil eines zur Betätigungshülse inneren selbsthemmenden Spindeltriebs und eines äußeren nichtselbsthemmenden Spindeltriebs ausgebildet. Die Vorteile dieser konstruktiv mit kostengünstigen Teilen realisierbaren Variante ergeben sich aus der nachfolgenden Figurenbeschreibung.

Die Hebelanordnung ist dazu ausgelegt, die eingeleitete Kraft zu untersetzen und in eine Selbstverstärkungseinrichtung einzuleiten, wobei die Umlenkung in Scheibenumfangsrichtung durch ein Hebelelement (siehe Zeichnung) oder einen Exzenter-Mechanismus erfolgt.

Dabei kann die Hebelanordnung als ausschließlich Druckkräfte übertragendes System ausgebildet sein oder aber als Zug- und Druckkräfte übertragendes System, was Vorteile insbesondere beim Lösen der Bremse mit sich bringt.

Ergänzt wird die Scheibenbremse vorzugsweise durch eine elektronische, rechnergestützte Steuerung oder Regelung, die z.B. die Normalkraft und ggf. andere Parameter der Bremsung - ggf. auch sensorisch gemessene - berücksichtigt.

Vorteilhaft ergänzet wird die Erfindung durch eine Vorrichtung zur Verschleißnachstellung über eine Längenveränderung der Druckstempel.

Nachfolgend wird die Erfindung anhand von Ausführungsbeispielen unter Bezug auf die Zeichnung anhand von Ausführungsbeispielen näher beschrieben.
Fig.1 eine vereinfachte Prinzipskizze einer Scheibenbremse;
Fig.2 eine Prinzipskizze einer ersten, auf einem Druckprinzip basierende Ausführungsform der Erfindung;
Fig.3 eine Prinzipskizze einer weiteren, auf einem Zug-/Druckprinzip basierenden Ausführungsform der Erfindung.

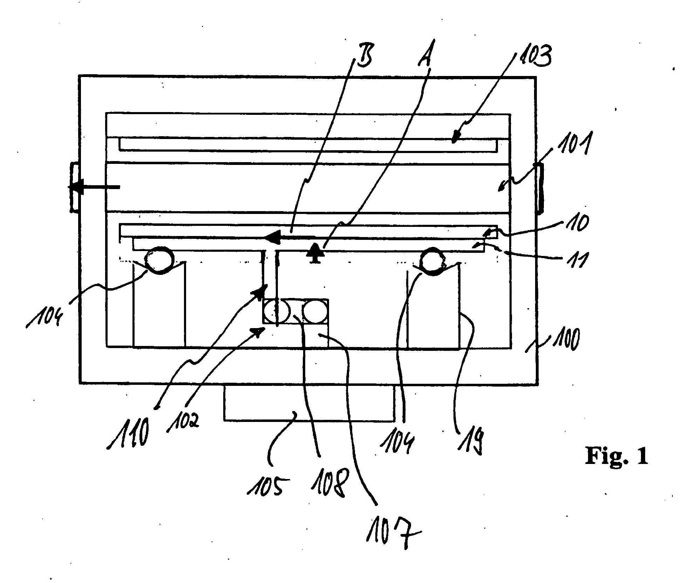

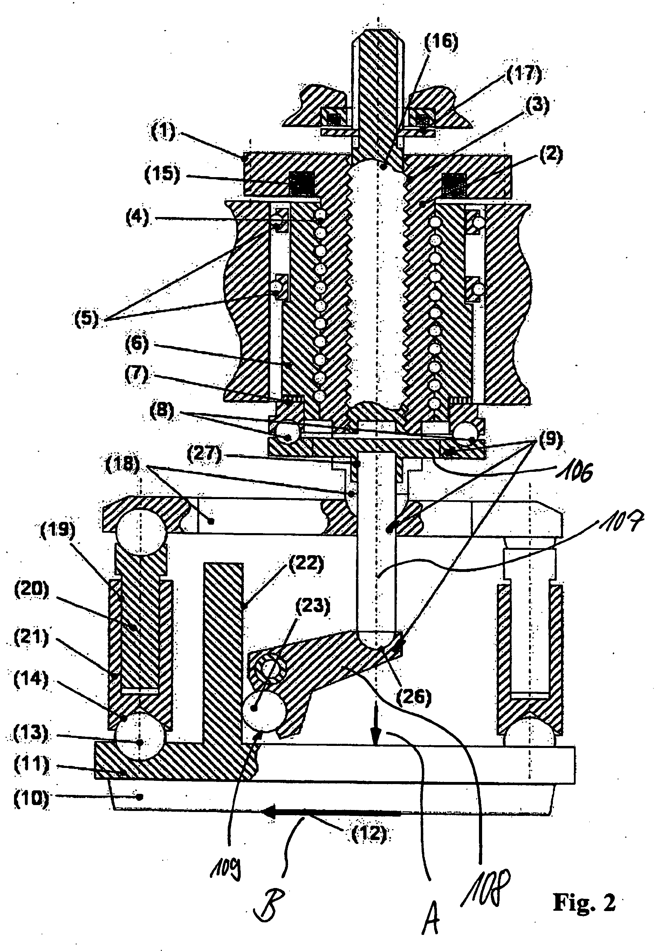

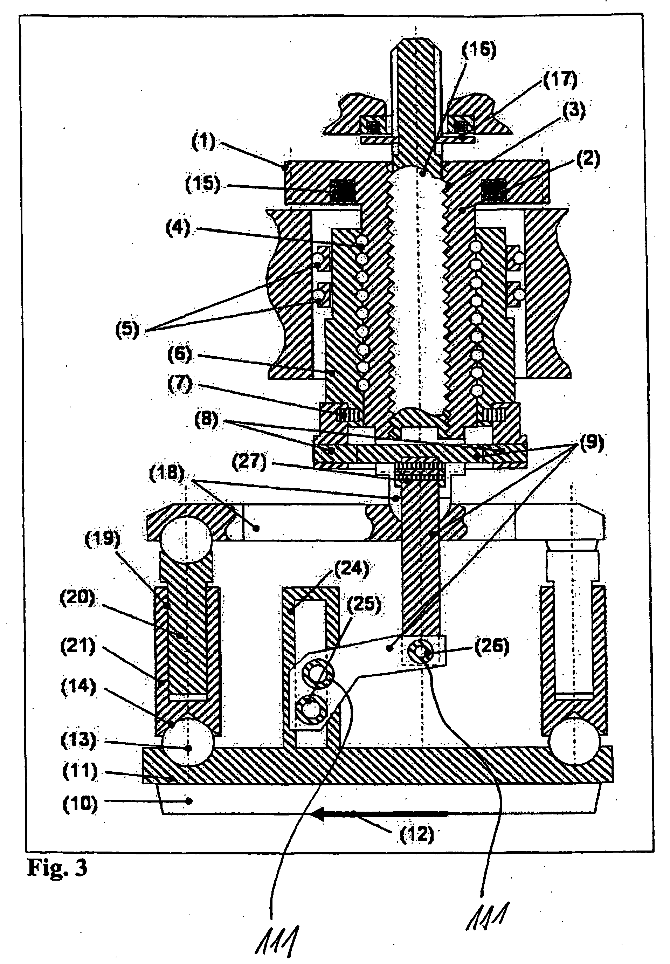

Die Bremse nach Fig. 1 baut auf einem Bremssattel 100 auf, der eine Bremsscheibe 101 im oberen Umfangsbereich umfasst. Zum Zuspannen der Bremse wird mittels einer detaillierter in Fig. 2 und 3 dargestellten Zuspannvorrichtung 102 ein erster zuspannseitiger Bremsbelag 10 in Umfangsrichtung bewegt, der sich mit seiner Druckplatte 11 in Umfangsrichtung der Bremsscheibe 101 direkt oder über Wälzkörper an einer Keil- oder Rampenfläche 104 abstützt, so dass er sich in Richtung der Bremsscheibe verschiebt.

Die Anlage am weiteren Bremsbelag 103 auf der Reaktionsseite wird z.B. durch eine zumindest im äußeren Umfangsbereich realisierte axiale Beweglichkeit der Bremsscheibe 101 und/oder durch eine bewegliche Anordnung des Bremssattels 100 an einem Bremsträger (hier nicht dargestellt) realisiert, so dass die erfindungsgemäße Bremse gleichermaßen für Schiebe-, Schwenk- und Festsattelkonzepte geeignet ist. Der Zuspannvorrichtung ist ein innerhalb oder vorzugsweise außerhalb des Bremssattels angeordneter Elektromotor 105 als Aktuator zugeordnet.

Der Elektromotor 105 treibt direkt oder indirekt über eine Getriebestufe - (Anschluss Motor: 1) ein in Fig. 1 nicht dargestelltes Spindelsystem.

Dieses Spindelsystem - siehe zunächst Fig. 2 - weist eine antreibende Betätigungshülse 2 auf, welche z.B. an einem zahnradartigen Ansatz 1 (Motoranschluss) durch den Elektromotor direkt bzw. das Getriebe gedreht wird.

Die Betätigungshülse 2 ist zentrales Bestandteil eines zur Betätigungshülse 2 inneren selbsthemmenden Spindeltriebs 3 und zum anderen Bestandteil eines hier äußeren, zum inneren Spindeltrieb 3 konzentrisch angeordneten nicht-selbsthernmenden Spindeltriebs 4.

Im Ausführungsbeispiel besteht der innere Spindeltrieb aus einem Gewindetrieb 3, der selbsthemmend ausgelegt ist (metrisches ISO-Gewinde, metrisches ISO-Trapezgewinde oder z.B. Sägengewinde) 3 und aus einem nicht-selbsthemmend ausgelegten Kugelumlauftrieb 4.

Die Funktion dieser Anordnung ist wie folge:

Bei einer Betriebsbremsung wird der Kugelumlauftrieb 4 betätigt, während der Gewindetrieb 3 durch die Selbsthemmung und evtl. ein zusätzliches Reibelement mit der Betätigungshülse 2 mitdreht.

Eine äußere Kugelumlaufmutter 6 des Kugelumlauftriebs 4 führt infolge der Drehbewegung der Betätigungshülse 2 eine Linearbewegung in Richtung der Bremsscheibe aus, welche durch eine axiale Abstützung auf einem Lagerring 7 gewährleistet wird (Unterbindung der Drehbewegung). Die Kugelumlaufmutter 6 ist dabei durch radial äußere Lager 5 z.B., im Bremssattel drehbar gelagert.

Durch axiale Wälzkörperabstützungen 8 wird über den Lagerring 7 eine Kraft auf eine Hebelanordnung 9 übertragen. Diese Hebelanordnung 9 weist in axialer Verlängerung der Wälzkörperabstützung der Kugelumlaufmutter 6 einen flanschartigen Teller 106 auf, an dem ein Druckelement, hier eine Druckstange 107 ausgebildet ist, die auf einen Drehhebel 108 wirkt, der mit einem seiner Enden (bei 26) mit der Druckstange 107 und mit dem anderen seiner Enden über einen Wälzkörper (Kugel 23) 109 an einem Ansatz 110 des Bremsbelages gelagert ist, so dass er die Bewegung des Druckelementes in einer Richtung A parallel zur Bremsscheibenachse in eine Bewegung des Druckelementes in einer Richtung B bzw. 12 parallel zur Bremsscheibe umsetzt.

Die Hebelanordnung 9 untersetzt die eingeleitete Kraft und leitet diese zur Betätigung der Selbstverstärkungseinrichtung um. Die Umlenkung in Scheibenumfangsrichtung kann durch das dargestellte Hebelelement 108 (siehe Zeichnung), aber auch über einen Exzenter-Mechanismus, erfolgen.

Im Ausführungsbeispiel wird der Bremsbelag 10 über eine Druckplatte 11 in Scheibenumfangsrichtung 12 bewegt, wobei sich die Rollkörper 13 an einer schrägen Rampe 14 abstützen und somit eine Spannkraft auf den Bremsbelag 10 aufprägen. Durch die Reibung zwischen rotierender Bremsscheibe und Bremsbelag 10 erfährt dieser eine zusätzliche Kraft in Umfangsrichtung 12, welche die Spannkraft der Bremseinheit erhöht (Selbstverstärkung).

Im Beispiel ist die Hebelanordnung 9 der Betriebsbremseinrichtung als ausschließlich Druckkräfte übertragendes System dargestellt (ein halbkugelartiges Ende der Druckstange 107 ist einer Kalotte des Drehhebels 108 gelagert).

Um den Bremsbelag 10 bei hohen Reibwerten zwischen Scheibe und Belag gegen die Drehrichtung der Scheibe zurückzuhalten bzw. um ein schnelleres Lösen der Bremse durch den Elektromotor zu erreichen, wird alternativ vorgeschlagen, die dargestellten Schnittstellen als Lager 111 auszuführen, die dazu ausgelegt sind, sowohl Zug- als auch Druckkräfte zu übertragen (Fig. 3).

Bei einer Ausführung als reines Druckprinzip gemäß Fig. 2 wird die Bremse durch Zurücknehmen der Spannkraft (Drehbewegung des Motors in entgegengesetzter Drehrichtung) wieder gelöst. Bei einer Ausführung als Zug- und Druckkräfte übertragendes System, kann der Kraftabbau durch aktives Zurückziehen der Hebelkonstruktion erfolgen. Zusätzlich gilt für das Ausführungsbeispiel, dass die Selbstverstärkungseinrichtung lediglich in einer Fahrtrichtung (vorwärts) genutzt werden kann, während in der anderen Richtung über die Parkbremse gebremst werden muss. Im Falle einer Zug-Druck-Auslegung ist es möglich die Selbstverstärkung in beiden Fahrtrichtungen zu nutzen. Hierzu müssen die Abstützungen 8, der Lagerring 7 und weitere Lagerstellen 26, 27 des Hebelanordnung 9 Zug- und Druckkräfte übertragen können. Das Druckelement 107 wirkt dann je nach Drehrichtung des Motors als Druck- oder Zugelement auf den Hebel ein.

Im Falle einer Parkbremsbetätigung wird die Kugelumlaufmutter 6 über eine Kupplung 15 mit der Betätigungshülse 2 verbunden und die Gewindespindel 16 über ein weiteres Halteelement 17 gegen Drehbewegungen gesichert. Durch Drehung der Betätigungshülse 2 wird die Gewindespindel 16 in eine Linearbewegung versetzt. Durch diese drückt die sie auf einen weiteren Hebelanordnung 18, welcher die Kraft untersetzt und auf die Stempel 19, bzw. ein anderes kraftübertragendes Element, welche die Rampengeometrie 14 der Selbstverstärkungseinrichtung beinhalten, überträgt. Durch die aufgeprägte Kraft wird der Bremsbelag 10 auf die Bremsscheibe gedrückt. Da der Gewindetrieb 3 selbsthemmend ausgeführt ist, können der Elektromotor 1 und die Kupplungen 15, 17 nach Erreichen der erforderlichen Spannkraft deaktiviert werden und die Bremswirkung wird aufrechterhalten. Zum Lösen der Parkbremse wird der Motor nach Aktivieren der Kupplungen in entgegen gesetzter Richtung gedreht und somit die Spannkraft abgebaut. Bei Erreichen der Ausgangsposition werden die Kupplungen wieder geöffnet. Somit ist die Bremseinheit bereit für Betriebsbremsungen.

Durch die Verschleißnachstellung soll der Abrieb der Bremsbeläge und der Bremsscheibe kompensiert werden. Hierzu kann, beispielsweise über die Längenvariation der Stempel 19 (durch Drehung der inneren Schraube 20 bei feststehender Mutter 21), die Druckplatte 11 in Richtung Bremsscheibe nachgeführt werden. Um die Betätigung der Betriebsbremse bei Verschleiß sicherzustellen, muss der Angriffspunkt der Umfangskraft senkrecht zu dieser verschiebbar sein. Im Ausführungsbeispiel für ein reines Druckprinzip ist dieses durch eine Laufbahn 22 und eine darauf rollende Kugel 23 dargestellt. Alternativ - so insbesondere für ein Zug-Druckprinzip - kann eine Buchse 25 in einer Kulissenführung 24 oder vergleichbares Prinzip angewandt werden

### Bezugszeichen

- Ansatz: 1
- Betätigungshülse: 2
- selbsthemmender Spindeltrieb: 3
- nicht-selbsthemmender Spindeltrieb: 4
- Kugelumlaufmutter: 6
- Lagerring: 7
- Lager: 5
- Wälzkörperabstützungen: 8
- Hebelanordnung: 9
- Bremsbelag: 10
- Druckplatte: 11
- Scheibenumfangsrichtung: 12
- Rollkörper: 13
- schräge Rampe: 14
- Lagerstellen: 26, 27
- Kupplung: 15
- Gewindespindel: 16
- Halteelement: 17
- Hebelanordnung: 18
- Stempel: 19
- Schraube: 20
- Mutter: 21
- Laufbahn: 22
- Kugel: 23
- Buchse: 25
- Kulissenführung: 24
- Bremssattel: 100
- Bremsscheibe: 101
- Zuspannvorrichtung: 102
- Bremsbelag: 10
- Bremsbelag: 103
- Rampenfläche: 104
- Elektromotor: 105
- flanschartiger Teller: 106
- Druckstange: 107
- Drehhebel: 108
- Wälzkörper: 109
- Ansatz: 110
- Bremsscheibenachse: A

## Patentansprüche

1. Scheibenbremse mit einem als Elektromotor (105) ausgelegten elektromechanischem Aktuator zur Betätigung einer Zuspannvorrichtung zum Zuspannen der Bremse, die eine Selbstverstärkungseinrichtung (14) aufweist, wobei die Zuspannvorrichtung ein vom Elektromotor direkt oder über ein Getriebe antreibbares Spindelsystem aufweist, das die Drehbewegungen des Elektromotors (105) und ggf. des diesem nachgeschalteten Getriebes in lineare Bewegungen eines Druckelementes (107) umsetzt, das über weitere zwischengeschaltete Bauelemente auf die Selbstverstärkungseinnchtung (14) einwirkt, **dadurch gekennzeichnet, dass**
a. die Zuspannvorrichtung eine Hebelanordnung (9) aufweist, die dazu ausgelegt ist, die eingeleitete Kraft zu untersetzen und in die Selbstverstärkungseinrichtung einzuleiten,
b. wobei das Druckelement (107) des Spindeltriebs dazu ausgelegt ist, den zuspannseitigen Bremsbelag (10) über die dem Druckelement nachgeschaltete Hebelanordnung (9) mit einer Bewegungskomponente (B, 12) parallel zur Bremsscheibe (101) zu bewegen,
c. wobei das linear bewegliche Druckelement (107) des Spindelsystems auf einen Hebel (108) der Hebelanordnung (9) einwirkt, der dazu dient, den zuspannseitigen Bremsbelag über weitere zwischengeschaltete Elemente gegen die Bremsscheibe zu drücken,
d. und wobei sich der Bremsbelag an seiner Druckplatte in Umfangsrichtung der Bremsscheibe über Wälzkörper an einer Keil- oder Rampenfläche (14) als Selbstverstärkungseinrichtung abstützt.

2. Scheibenbremse nach Anspruch 1, **dadurch gekennzeichnet, dass** die Spindelanordnung dazu ausgelegt ist, einen Bremsbelag zumindest mit einer Bewegungskomponente parallel zur Bremsscheibe zu bewegen.

3. Scheibenbremse nach einem der vorstehenden Ansprüche, **dadurch gekennzeichnet, dass** der Bremsbelag (10) an seiner Druckplatte (11, 22) mit einem Element der Hebelanordnung (9) gekoppelt ist.

4. Scheibenbremse nach einem der vorstehenden Ansprüche, **dadurch gekennzeichnet, dass** die Keil- oder Rampenflächen (14) der Selbstverstärkungseinrichtung an bremsscheibenzugewandten Enden von in sich längenveränderlichen Druckstempeln (19) ausgebildet sind.

5. Scheibenbremse nach einem der vorstehenden Ansprüche, **dadurch gekennzeichnet, dass** das Spindelsystem einer antreibende Betätigungshülse (2) aufweist, welche - z.B. an einem zahnradartigen Ansatz (1) - durch den Elektromotor (105) direkt bzw. das diesem nachgeschaltete Getriebe drehbar ist.

6. Scheibenbremse nach Anspruch 5, **dadurch gekennzeichnet, dass** die Betätigungshülse (2) als zentrales Bestandteil eines zur Betätigungshülse inneren selbsthemmenden Spindeltriebs (3) und eines äußeren nichtselbsthemmenden Spindeltriebs (4) ausgebildet ist.

7. Scheibenbremse nach Anspruch 6, **dadurch gekennzeichnet, dass** der nichtselbsthemmende Gewindetrieb als Kugelumlauftrieb (4) ausgelegt ist.

8. Scheibenbremse nach einem der vorstehenden Ansprüche, **dadurch gekennzeichnet, dass** die Hebelanordnung (9) als ausschließlich Druckkräfte übertragendes System ausgebildet ist.

9. Scheibenbremse nach einem der vorstehenden Ansprüche 1 bis 7, **dadurch gekennzeichnet, dass** die Hebelanordnung (9) als Zug- und Druckkräfte übertragendes System ausgebildet ist.

10. Scheibenbremse nach einem der vorstehenden Ansprüche, **gekennzeichnet durch** eine Vorrichtung zur Verschleißnachstellung über eine Längenveränderung der Druckstempel (19).

11. Scheibenbremse nach einem der vorstehenden Ansprüche, **gekennzeichnet durch** eine Kugelumlaufmutter (6), die für eine Parkbremsung über eine Kupplung (15) mit der Betätigungshülse (2) verbindbar ist, wobei eine Gewindespindel (16) über ein weiteres Halteelement (17) gegen Drehbewegungen gesichert ist.

12. Scheibenbremse nach einem der vorstehenden Ansprüche, **dadurch gekennzeichnet, dass** der Angriffspunkt der Hebelanordnung an der Druckplatte senkrecht zur Scheibenebene verschiebbar ist.

## Claims

1. Disc brake having an electromechanical actuator configured as an electric motor (105) for actuating a brake application device to apply the brake, comprising a self-energising means (14), wherein the brake application device comprises a spindle system which can be driven by the electric motor directly or via a gearing, said spindle system converting the rotational movements of the electric motor (105) and optionally of the gearing arranged downstream thereof into linear movements of a pressure element (107) which acts by means of further intermediately placed structural elements upon the self-energising means (14), **characterised in that**
a. the brake application device comprises a lever arrangement (9) which is designed to support the force introduced and to introduce it into the self-energising means,
b. wherein the pressure element (107) of the spindle drive is designed to move the application-side brake pad (10) via the lever arrangement (9), arranged downstream of the pressure element, with a movement component (B, 12) parallel to the brake disc (101),
c. wherein the linearly movable pressure element (107) of the spindle system acts on a lever (108) of the lever arrangement (9) which serves to press the application-side brake pad via further intermediately arranged elements against the brake disc,
d. and wherein the brake pad rests on its pressure plate in the circumferential direction of the brake disc via rolling bodies on a wedge or ramp surface (14) as a self-energising means.

2. Disc brake according to claim 1, **characterised in that** the spindle arrangement is designed to move a brake pad at least with a movement component parallel to the brake disc.

3. Disc brake according to one of the preceding claims, **characterised in that** the brake pad (10) is coupled on its pressure plate (11, 22) with an element of the lever arrangement (9).

4. Disc brake according to one of the preceding claims, **characterised in that** the wedge or ramp surfaces (14) of the self-energising means are formed at ends, facing the brake disc, of pressure pistons (19) which can be varied in length.

5. Disc brake according to one of the preceding claims, **characterised in that** the spindle system comprises a driving actuating sleeve (2) which can be rotated - e.g. on a gearwheel-like attachment (1) - by the electric motor (105) directly or by the gearing arranged downstream thereof.

6. Disc brake according to claim 5, **characterised in that** the actuating sleeve (2) is formed as a central component of an inner self-locking, relative to the actuating sleeve, spindle drive (3), and an outer non-self-locking spindle drive (4).

7. Disc brake according to claim 6, **characterised in that** the non-self-locking spindle drive is configured as a ball screw drive (4).

8. Disc brake according to one of the preceding claims, **characterised in that** the lever arrangement (9) is formed as a system transmitting exclusively compressive forces.

9. Disc brake according to one of the preceding claims 1 to 7, **characterised in that** the lever arrangement (9) is formed as a system transmitting tensile and compressive forces.

10. Disc brake according to one of the preceding claims, **characterised by** a device for adjustment for wear via a change in length of the pressure piston (19).

11. Disc brake according to one of the preceding claims, **characterised by** a ball screw nut (6) which can be connected to the actuating sleeve (2) via a coupling (15) for parking braking, wherein a threaded spindle (16) is secured via a further holding element (17) against rotational movements.

12. Disc brake according to one of the preceding claims, **characterised in that** the engagement point of the lever arrangement on the pressure plate can be displaced perpendicular to the disc plane.

## Revendications

1. Frein à disque à un actionneur électromécanique conçu sous forme d'un moteur électrique (105) pour l'actionnement d'une unité de serrage à serrer le frein, qui comprend un dispositif à renfort automatique (14), dans lequel ledit dispositif de serrage comprend un système à broche apte à être entraîné par ledit électromoteur directement ou via une transmission, qui convertit les mouvement rotatifs dudit électromoteur (105) et éventuellement de ladite transmission en aval du moteur en mouvements linéaires d'un élément presseur (107) qui agit sur ledit dispositif à renfort automatique (14) via des autres composants interposés, **caractérisé en ce que**
a) ledit dispositif de serrage comprend un système à levier (9) conçu pour réduire l'effort y introduit et pour son introduction dans ledit dispositif à renfort automatique,
(b) dans lequel ledit élément presseur (107) du système d'entraînement à broche est conçu pour le mouvement de la garniture du frein (10) du côté de serrage via ledit système à levier (9) en aval dudit élément presseur à un composant de mouvement (B, 12) en parallèle au disque de frein (101),
(c) dans lequel ledit élément presseur (107) mobile de façon linéaire dudit système d'entraînement à broche agit sur un levier (108) dudit système à levier (9), qui sert à presser ladite garniture de frein du côté de serrage via des autres éléments interposés contre ledit disque de frein,
(d) et dans lequel ladite garniture de frein s'appuie à sa plaque presseuse en sens périphérique dudit disque de frein via des éléments roulants à une aire en coin ou rampe (14) en tant que dispositif à renfort automatique.

2. Frein à disque selon la revendication 1, **caractérisé en ce que** ledit système à broche est conçu pour un mouvement de ladite garniture de frein au moins à un composant de mouvement en parallèle audit disque de frein.

3. Frein à disque selon une quelconque des revendications précédentes, **caractérisé en ce que** ladite garniture de frein (10) est accouplée, à son disque presseur (11, 22), à un élément dudit système à levier.

4. Frein à disque selon une quelconque des revendications précédentes, **caractérisé en ce que** lesdites aires en coin ou en rampe (14) dudit dispositif à renfort automatique sont formées aux extrémités en face du disque de frein des poinçons de pression (19) variables en leur longueur.

5. Frein à disque selon une quelconque des revendications précédentes, **caractérisé en ce que** ledit système à broche comprend une douille d'actionnement entraînante, qui - par exemple à une oreille (1) similaire à une roue dentée - est apte à être mise en rotation par ledit électromoteur (105 directement ou respectivement par ladite transmission en aval dudit moteur.

6. Frein à disque selon la revendication 5, **caractérisé en ce que** ladite douille d'actionnement (2) est configurée en tant que composant central d'un système d'entraînement à broche autobloquant (3) à l'intérieur de ladite douille d'actionnement et d'un système d'entraînement à broche non-autobloquant extérieur (4).

7. Frein à disque selon la revendication 6, **caractérisé en ce que** ledit système d'entrainement à vis non-autobloquant est conçu sous forme d'un système d'entraînement rotatif à bille (4).

8. Frein à disque selon une quelconque des revendications précédentes, **caractérisé en ce que** ledit système à levier (9) est conçu en tant qu'un système de transmission des efforts de pression seulement.

9. Frein à disque selon une quelconque des revendications précédentes 1 à 7, **caractérisé en ce que** ledit système à levier (9) est conçu en tant qu'un système de transmission des efforts de traction et de pression.

10. Frein à disque selon une quelconque des revendications précédentes, **caractérisé par** un dispositif de rattrapage d'usure via une variation de la longueur desdits poinçons de pression (19).

11. Frein à disque selon une quelconque des revendications précédentes, **caractérisé par** un écrou rotatif à bille (6), qui est apte à être relié via un coupleur (15) à ladite douille d'actionnement (2) pour une opération de serrage de stationnement, dans lequel une broche à vis (16) est bloquée contre des mouvements rotatifs via un autre élément de retenue (17).

12. Frein à disque selon une quelconque des revendications précédentes, **caractérisé en ce que** le point d'attaque dudit système à levier est déplaçable audit plaque presseur en un sens orthogonal au plan du disque.
